# EUROPÄISCHE PATENTSCHRIFT

(11) **EP 3 445 166 B1**
(45) Veröffentlichungstag und Bekanntmachung des Hinweises auf die Patenterteilung: **13.05.2020**
(21) Anmeldenummer: 18709547.6
(22) Anmeldetag: 06.03.2018
(51) Int. Cl.: A01L 3/02, A01L 5/00

(54) **PFERDEHUFSCHUH UND VERFAHREN ZUR BEFESTIGUNG EINES PFERDEHUFSCHUHS AN EINEM PFERDEHUF**
HORSESHOE AND METHOD OF ATTACHING A HORSESHOE TO A HORSE HOOF
FER À CHEVAL ET PROCÉDÉ DE FIXATION D'UN FER À CHEVAL À UN SABOT D'UN CHEVAL

(30) Priorität: 14.03.2017 DE 202017101467 U
(43) Veröffentlichungstag der Anmeldung: 27.02.2019
(73) Patentinhaber: Buschmann, Erich, 31553 Auhagen (DE); Kuester, Joachim, 35614 Aßlar - Bermoll (DE); Lang, Martin, 75433 Maulbronn (DE)
(72) Erfinder: Buschmann, Erich, 31553 Auhagen (DE); Kuester, Joachim, 35614 Aßlar - Bermoll (DE); Lang, Martin, 75433 Maulbronn (DE)
(74) Vertreter: Wacker, Jost Oliver
(86) Internationale Anmeldenummer: PCT/EP2018/055469
(87) Internationale Veröffentlichungsnummer: WO 2018/166843

(56) Entgegenhaltungen:
- WO-A2-2006/030229
- DE-U1-202010 002 461
- FR-A- 371 955

## Beschreibung

Die Erfindung betrifft einen Pferdehufschuh nach dem Oberbegriff des Anspruchs 1 sowie ein Verfahren zur Anbringung des Pferdehufschuhes an einem Pferdehuf mittels eines Klebemittels. Der Pferdehufschuh ist insbesondere derart ausgebildet, dass er über eine Bearbeitungsperiode von 6 bis 8 Wochen hinweg als permanenter Hufschutz beziehungsweise als Alternative zu einem Hufeisenbeschlag verwendet werden kann. Der Pferdehufschuh weist hierzu ein hufeisenförmiges Bodenteil auf, das zumindest überwiegend aus einem Elastomer hergestellt ist. Damit soll der natürliche Hufmechanismus des Pferdehufs in keiner Weise eingeschränkt werden. Von dem Bodenteil erstreckt sich eine äußere Anlegewand weg, die zum seitlichen Anlegen an eine Außenseite des Pferdehufs vorgesehen ist. Ferner weist der Pferdehufschuh zwei Befestigungseinrichtungen auf, die jeweils an einem Ende des Pferdehufschuhes vorgesehen sind. Die Befestigungseinrichtungen sind dabei vorgesehen, um den Pferdehufschuh im Bereich der Eckstreben des Pferdehufs befestigen zu können.

Derartige Pferdehufschuhe sind beispielsweise als Alternative zu herkömmlichen Hufeisen bekannt. Zudem werden sie teilweise als orthopädische Hilfsmittel eingesetzt, da die elastischen Eigenschaften des verwendeten Materials eine schonende Wirkung auf den Pferdehuf hat.

Aus der DE 202010002461 U1 ist ein Pferdehufschuh bekannt, dessen Bodenteil aus einem Elastomer gebildet ist. Zur Verstärkung des Elastomerteils sind in dieses Stabilisierungsmittel eingelassen, die beispielsweise durch ein Textilcord oder ein Stahlcord gebildet sind. Ferner sind an den Enden des Bodenteils Klebelaschen vorgesehen, die zur besseren Verbindung des Pferdehufschuhes mit den Eckstreben des Pferdehufs dienen.

Nachteilig an den bekannten Pferdehufschuhen ist, dass die Herstellung einer ausreichend stabilen Klebeverbindung, insbesondere im Bereich der Eckstreben, mit einem relativ hohen Aufwand verbunden ist.

Die Aufgabe der Erfindung ist es, bei einem gattungsgemäßen Pferdehufschuh die genannten Nachteile zu vermeiden und die Herstellung einer stabilen Klebeverbindung in komfortabler Weise zu ermöglichen.

Diese Aufgabe wird durch einen Pferdehufschuh mit den Merkmalen des Anspruchs 1 gelöst. Dabei weisen die beiden Befestigungseinrichtungen jeweils eine U-förmig umlaufende Aufnahmewand auf, die eine Trachteneckaufnahme zum jeweiligen Ende hin begrenzt. Die Trachteneckaufnahmen ermöglichen dabei eine Aufnahme des Pferdehufs im Pferdehufschuh, bei der die U-förmigen Aufnahmewände der Befestigungseinrichtungen die Trachtenecken des Pferdehufs umgreifen, wobei die Aufnahmewände infolge des hierfür verwendeten elastischen Materials gegen die Trachtenecken vorgespannt sind. Hierdurch kann während des Aushärtens eines zuvor aufgetragenen Klebemittels allein durch die elastischen Rückstellkräfte des elastischen Materials ein selbsttätiges Halten des Pferdehufschuhs am Pferdehuf sowie ein gewisser Anpressdruck erzeugt werden. Dies ermöglicht die Herstellung einer sehr stabilen Klebeverbindung in komfortabler Weise.

In einer besonders vorteilhaften Ausführungsform geht die Aufnahmewand in eine innere Anlegewand über, die zum seitlichen Anlegen an eine Innenseite beziehungsweise an der Hornsohle des Pferdehufs dient. Hierdurch kann auch an der Innenseite beziehungsweise mit der Hornsohle des Pferdehufs eine stabile umlaufende Klebeverbindung mit dem Pferdehufschuh hergestellt werden.

Dabei ist es günstig, wenn die innere Anlegewand zwischen beiden Hufschuhenden geschlossen umläuft, wodurch auch an der Innenseite des Pferdehufs die Herstellung einer sehr stabilen Klebeverbindung gewährleistet werden kann. Vorteilhafterweise ist dabei an der inneren Anlegewand eine Dichtlippe vorgesehen, die zum dichtenden Anlegen am Pferdehuf vorgesehen ist. Durch eine derartige Dichtlippe kann im angebrachten Zustand des Pferdehufschuhes das Eindringen von Fremdkörpern oder Feuchtigkeit zwischen der Innenseite des Pferdehufs und der Anlegewand des Pferdehufschuhes verhindert werden. Auf diese Weise kann die Lebenszeit der hergestellten Klebeverbindung und damit auch die Tragezeit des Pferdehufschuhes insgesamt deutlich erhöht werden.

Zudem ist es günstig, wenn an der Aufnahmewand und/oder der inneren Anlegewand Anpressmittel vorgesehen sind, mittels denen über die Aufnahmewand und/oder die innere Anlegewand erhöhte Klebeanpressdrücke erzeugt werden können. Auf diese Weise werden die während des Aushärtens der Klebemittel benötigten Anpressdrücke in dauerhaft stabiler und komfortabler Weise erzeugt.

Die Anpressmittel weisen dabei vorteilhafterweise wenigstens einen Kraftübertragungskörper auf, der sich von einer Unterseite des Bodenteils bis zur Aufnahmewand und/oder der inneren Anlegewand erstreckt. Durch einen derartigen Kraftübertragungskörper können die für die Erzeugung der benötigten Klebeanpressdrücke erforderlichen Kräfte von der Unterseite des Bodenteils zur Aufnahmewand und/oder der inneren Anlegewand übertragen werden, wie insbesondere durch das bloße Abstellen des betreffenden Pferdehufs auf einem ebenen Untergrund beziehungsweise dessen Reaktionskräfte auf die Gewichtskraft des Pferdes.

Hierbei ist es günstig, wenn der Kraftübertragungskörper wenigstens teilweise über die Unterseite des Bodenteils hinausragt, wodurch beim Abstellen des Pferdehufs auf dem Untergrund eine besonders stabile Kraftübertragung auf die Aufnahmewand und/oder die innere Anlegewand gewährleistet werden kann.

In einer weiteren vorteilhaften Ausführungsform weisen die Anpressmittel im Bereich der Aufnahmewand wenigstens einen, einen Hohlraum umschließenden, Anpressdom auf. Die Verwendung eines derartigen Anpressdoms ermöglicht beim Aufsetzen des Pferdehufs eine relativ starke elastische Verformung des Kraftübertragungskörpers und dadurch eine verbesserte Verteilung der durch die elastische Rückverformung aufgebrachten Anpressdrücke auch in unebenen oder kantigen Bereichen des Pferdehufes, wie insbesondere im Bereich der Eckstreben.

Ferner ist es günstig, wenn an der äußeren Anlegewand wenigstens eine Dehnungsausnehmung eingelassen ist, wodurch die Anlegewände relativ leicht aufgedehnt werden können, um den Pferdehufschuh somit einfacher und komfortabler auf den Pferdehuf aufsetzen zu können.

Darüber hinaus ist an einer Oberseite des Bodenteils und/oder einer Innenseite der äußeren Anlegewand eine Aufnahmestruktur vorgesehen, die eine verbesserte Aufnahme eines viskosen Klebemittels ermöglicht. Durch eine derartige Aufnahmestruktur kann insbesondere die Oberfläche des Bodenteils und/oder der Anlegewand vergrößert werden, um ein vergrößertes Aufnahmevolumen und eine größere Anhaftfläche für das Klebemittel zur Verfügung zu stellen.

Dabei ist es günstig, wenn die Aufnahmestruktur Noppen aufweist, die vom Bodenteil abstehen, wodurch eine besonders hohe Oberflächenvergrößerung am Bodenteil hergestellt werden kann. Alternativ oder zusätzlich hierzu kann die Aufnahmestruktur vorteilhafterweise Rillen aufweisen, die in die Innenseite der äußeren Anlegewand eingelassen sind. Durch derartige Rillen kann auch an der Anlegewand eine ausreichende Verteilung und ein stabiles Anhaften des Klebemittels gewährleistet werden.

In jedem Fall ist es hierbei günstig, wenn das Bodenteil, die Anlegewand und die Befestigungseinrichtungen zumindest überwiegend aus einem Elastomer gebildet sind, was eine kostengünstige Herstellung des Pferdehufschuhes ermöglicht. Beispielsweise sind das Bodenteil, die Anlegewand und die Befestigungseinrichtungen anteilig aus einem natürlichen oder künstlichen Kautschuk oder einer Kombination aus beidem hergestellt. Zudem können in das Bodenteil, die Anlegewand und/oder die Befestigungseinrichtungen Stabilisierungsmittel in das Elastomer eingebettet sein, um höhere Materialfestigkeiten zu erzielen. Die Stabilisierungsmittel können dabei durch textilartige Flächengebilde, wie einen Textil- oder Stahlcord oder ein sonstiges Gewebe oder Geflecht gebildet sein. Hierdurch kann der Pferdehufschuh in kostengünstiger Weise mit relativ genau vorbestimmbaren Materialeigenschaften hergestellt werden, wie insbesondere hinsichtlich seines elastischen Verformungsverhaltens, seines Abriebs und seiner Lebensdauer. Die Verwendung des Elastomers erlaubt dabei zudem, dass beim Aufziehen des Pferdehufschuhes auf einen Pferdehuf elastische Rückstellkräfte generiert werden, mittels denen eine besonders stabile und insbesondere auch formschlüssige Festlegung erzielt werden kann.

Darüber hinaus wird die oben genannte Aufgabe durch ein Verfahren gemäß Anspruch 13 gelöst, bei dem in einem ersten Schritt ein Klebemittel am Bodenteil und an der Anlegewand des Pferdehufschuhes sowie an einem vorbereiteten Huf aufgetragen wird. In einem zweiten Schritt wird dann der Pferdehufschuh am Pferdehuf angebracht, worauf in einem dritten Schritt der Pferdehuf mit angebrachtem Pferdehufschuh auf einem Untergrund abgestellt wird. Hierdurch kann das Klebemittel unter einem zwischen dem Pferdehufschuh und dem Pferdehuf wirkenden Anpressdruck aushärten. In einem vierten Schritt werden nach dem Aushärten des Klebemittels dann die Anpressmittel vom übrigen Pferdehufschuh entfernt. Hierdurch können die Anpressmittel unabhängig vom übrigen Pferdehufschuh derart ausgebildet werden, dass sie während der Aushärtezeit der Klebemittel einen optimalen Anpressdruck in allen relevanten Bereichen erzeugen können. Nach dem Aushärten können die Anpressmittel dann vom Pferdehufschuh entfernt werden, um mögliche Störungen in der Bewegung des Pferdes zu vermeiden.

Vorteilhafterweise wird im zweiten Schritt der Pferdehufschuh zunächst auf eine Hufspitze des Pferdehufs aufgesetzt. Anschließend wird der Pferdehufschuh dann bis hin zu den Trachteneckaufnahmen auf den Pferdehuf aufgezogen. Hierbei sorgen die elastischen Rückstellkräfte des aus Elastomer hergestellten Pferdehufschuhs für einen stabilen und formschlüssigen Halt an dem betreffenden Pferdehuf. Hierdurch kann der Pferdehufschuh besonders einfach an dem betreffenden Pferdehuf angebracht werden, wobei über die gesamte Länge des Pferdehufschuhes ein relativ gleichmäßiger Anpressdruck während des Aushärtens der Klebemittel sichergestellt werden kann. Insbesondere können dabei die Trachteneckaufnahmen zum Abschluss des Anlegevorgangs derart auf die Trachtenecken aufgedrückt werden, dass der Pferdehufschuh infolge der elastischen Rückstellkräfte selbsttätig am Pferdehuf gehalten ist.

Um eine besonders exakte Festlegung des Pferdehufschuhes an dem Pferdehuf während des Klebevorgangs sicherzustellen, wird der Pferdehufschuh vor dem dritten Schritt vorteilhafterweise zusätzlich mittels einer Umhüllung in der gewünschten Position am Pferdehuf gesichert. Als Umhüllung kann hierbei beispielsweise ein Klebeband oder ein elastisches Wickelmaterial verwendet werden.

In den Figuren ist eine beispielhafte Ausführungsform der Erfindung dargestellt. Es zeigen:
- Figur 1: eine perspektivische Ansicht eines erfindungsgemäßen Pferdehufschuhes zur Befestigung an einem Pferdehuf,
- Figur 2: eine Draufsicht auf den Pferdehufschuh nach Figur 1,
- Figur 3: eine Draufsicht auf eine Unterseite des Pferdehufschuhes nach Figur 1,
- Figur 4: eine in Ebene IV - IV geschnittene Ansicht des Pferdehufschuhs aus Figur 2,
- Figur 5: eine vergrößerte Ansicht von Detail V aus Fig. 4 und
- Figur 6: eine in Ebene VI - VI geschnittene Ansicht des Pferdehufschuhs aus Figur 2 vor Anbringung am Pferdehuf.

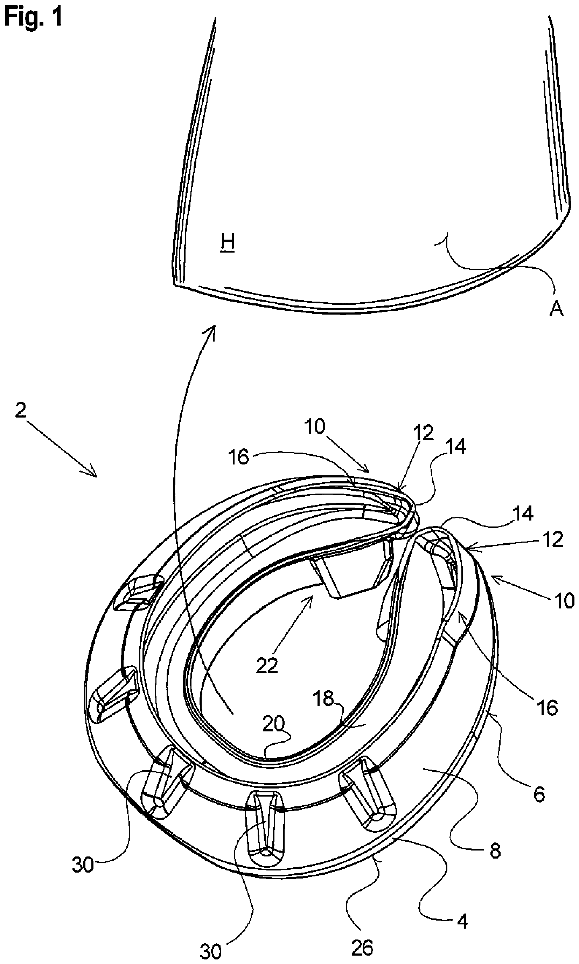

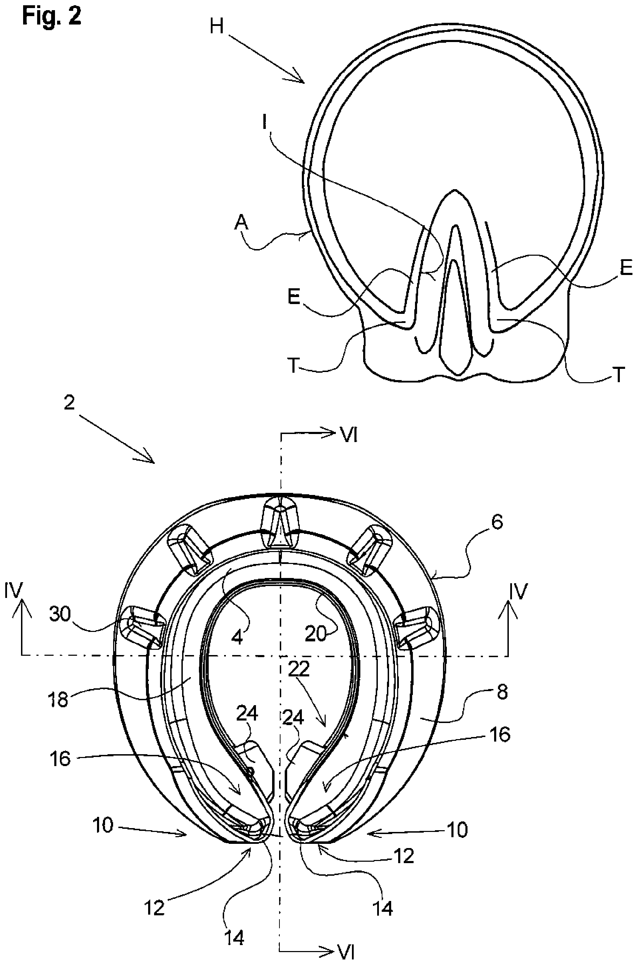

Die Figuren 1 und 2 zeigen einen Pferdehufschuh 2 zur Befestigung an einem Pferdehuf H. Der Pferdehufschuh 2 weist dabei ein Bodenteil 4 auf, von dem sich an einem äußeren Rand 6 eine äußere Anlegewand 8 weg erstreckt, die für das seitliche Anlegen und Befestigen an einer Außenseite A des Pferdehufs H vorgesehen ist.

Der Pferdehufschuh 2 ist U-förmig ausgebildet und weist an seinen zwei Enden 10 jeweils eine Befestigungseinrichtung 12 auf. Beide Befestigungseinrichtungen 12 bilden dabei eine U-förmig umlaufende Aufnahmewand 14, die eine Trachteneckaufnahme 16 umschließt. Diese beiden Trachteneckaufnahmen 16 dienen zum Aufsetzen auf die zwei Trachtenecken T des jeweiligen Pferdehufs H, wie sie aus der unterseitigen Ansicht des Pferdehufes H gemäß Figur 2 zu entnehmen sind. Dabei sind die beiden Aufnahmewände 14 derart geformt und dimensioniert, dass sie die Trachtenecken T umgreifen können. Beide Aufnahmewände 14 gehen hierbei außenseitig in die äußere Anlegewand 8 und innenseitig in eine innere Anlegewand 18 über, die zum seitlichen Anlegen und Befestigen an einer Innenseite I des Pferdehufs H vorgesehen ist.

Wie aus den Figuren 1 und 2 zu entnehmen ist, ist die innere Anlegewand 18 zwischen beiden Enden 10 des Pferdehufschuhes 2 geschlossen umlaufend ausgebildet und weist an ihrem freien Rand eine Dichtlippe 20 auf.

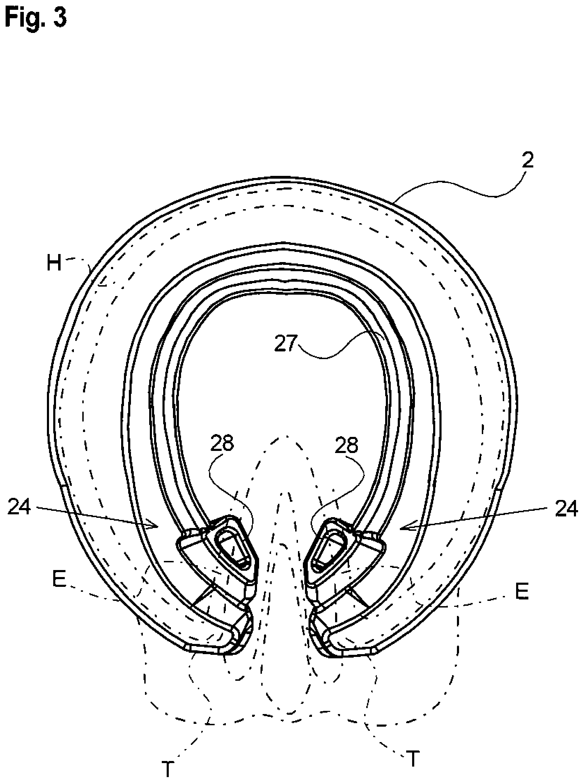

Darüber hinaus sind an den Befestigungseinrichtungen 12 Anpressmittel 22 vorgesehen, mittels denen erhöhte Klebeanpressdrücke an der Aufnahmewand 14 und an der inneren Anlegewand 18 erzeugt werden können. Hierzu weisen die Anpressmittel 22 beispielsweise Kraftübertragungskörper 24 auf, die sich von einer Unterseite 26 des Pferdehufschuhes 2 bis zur Aufnahmewand 14 beziehungsweise zur inneren Anlegewand 18 erstrecken, wobei die Anpressmittel 22 etwas über die Unterseite 26 hinausragen. Wie insbesondere aus Figur 3 zu entnehmen ist, können die Kraftübertragungskörper 24 dabei als umlaufender Anpresskragen 27 und als Anpressdome 28 ausgeformt sein, die besonders gut elastisch verformbar sind. Auf diese Weise kann der Anpressdruck auch im Bereich von Eckstreben E des Pferdehufes H relativ gleichmäßig auf die Aufnahmewand 14 beziehungsweise die innere Anlegewand 18 aufgebracht werden.

Darüber hinaus weist der Pferdehufschuh 2 an der äußeren Anlegewand 8 außenseitig mehrere Dehnungsausnehmungen 30 auf, wie aus den Figuren 1 und 2 zu entnehmen ist. Durch diese Dehnungsausnehmungen 30 kann die Anlegewand 8 bei Aufbringung äußerer Zugkräfte leichter gestreckt werden.

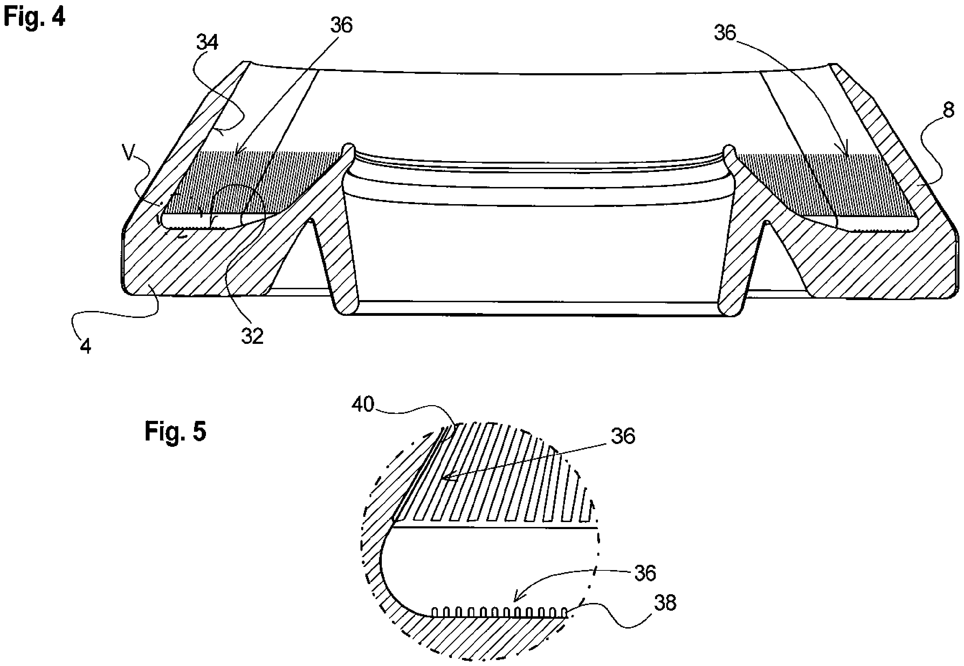

Ferner weist der Pferdehufschuh 2, wie aus den Figuren 4 und 5 zu entnehmen ist, sowohl an einer Oberseite 32 des Bodenteils 4 als auch an einer Innenseite 34 der äußeren Anlegewand 8 eine Aufnahmestruktur 36 auf, die zur besseren Aufnahme und Anhaftung eines viskosen Klebers dient. Wie aus Figur 5 zu entnehmen ist, kann die Aufnahmestruktur 36 hierzu beispielsweise Noppen 38 und/oder Rillen 40 oder sonstige Ausnehmungen aufweisen.

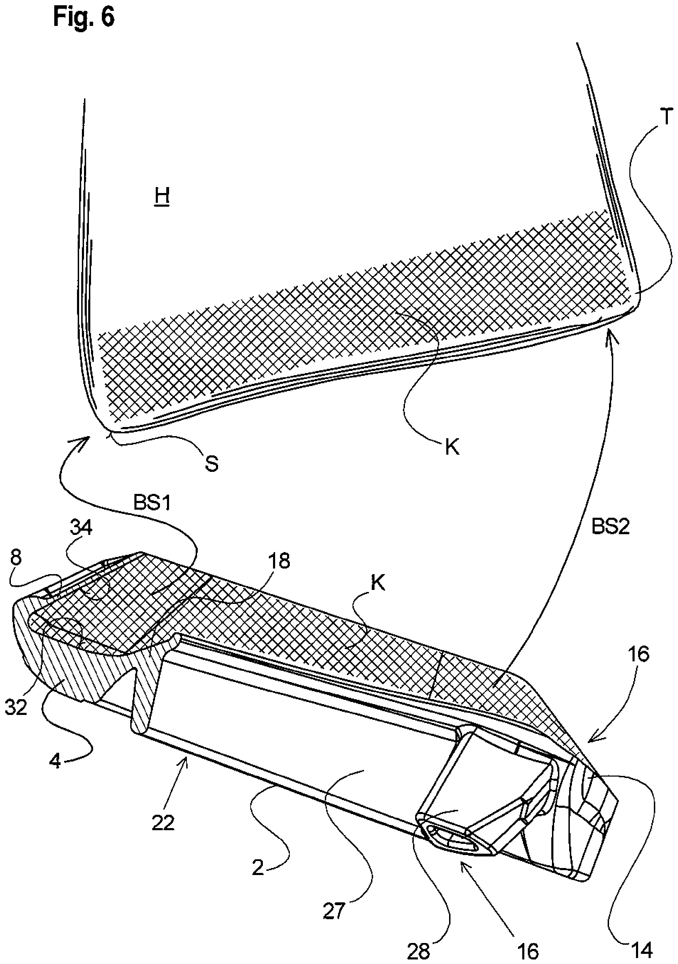

Der gesamte Pferdehufschuh 2 besteht dabei vollständig aus einem Elastomermaterial, das zumindest anteilig durch einen natürlichen, einen künstlichen Kautschuk oder einer Kombination von beidem gebildet sein kann. Zudem können in das Bodenteil 4, die Anlegewand 8 und/oder die Befestigungseinrichtungen 12 Stabilisierungsmittel in das Elastomer eingebettet sein (nicht dargestellt), um höhere Materialfestigkeiten zu erzielen. Die Stabilisierungsmittel können dabei durch textilartige Flächengebilde, wie einen Textil- oder Stahlcord oder ein sonstiges Gewebe oder Geflecht gebildet sein
Der Pferdehufschuh 2 wird wie folgt am Pferdehuf H angebracht:
In einem ersten Schritt wird sowohl an der Oberseite 32 des Bodenteils 4 als auch an der Innenseite 34 der äußeren Anlegewand 8 des Pferdehufschuhes 2 sowie am vorbereiteten Pferdehuf H ein Klebemittel K aufgetragen, wie in Figur 6 dargestellt. Hierbei wird das Klebemittel K am Pferdehufschuh 2 über die Aufnahmestruktur 36 verteilt.

Anschließend wird der Pferdehufschuh 2 wie durch Pfeil BS1 dargestellt in einem zweiten Schritt auf eine Hufspitze S an der Vorderseite des Pferdehufs H aufgesetzt. Anschließend wird das Bodenteil 4 nach und nach bis zu den Enden 10 hin an den Pferdehuf H aufgezogen, bis die Trachtenecken T in den Trachteneckaufnahmen 16 aufgenommen sind und der Pferdehufschuh 2 durch seine elastischen Rückstellkräfte selbsttätig und insbesondere formschlüssig am Pferdehuf H gehalten ist.

In dieser angebrachten Position wird der Pferdehufschuh 2 dann mittels einer temporär angebrachten Umhüllung, die beispielsweise durch Klebeband oder ein elastisches Wickelmaterial gebildet ist (nicht dargestellt) am Pferdehuf H zusätzlich in seiner Position gesichert. Anschließend wird der Pferdehuf H mit dem gesicherten Pferdehufschuh 2 auf einem ebenen Untergrund abgestellt, um das Klebemittel in dieser Position aushärten zu lassen.

In dieser abgesetzten Position drücken die Anpressmittel 22, die im unbelasteten Zustand über die Unterseite 26 des Bodenteils 4 hinausragen, von innen mittels des Anpresskragens 27 gegen die innere Anlegewand 18, die dadurch umlaufend an der Innenseite I des Pferdehufs H befestigt wird. Gleichzeitig wird hierbei auch die Dichtlippe 20 gegen die Innenseite I gedrückt und sorgt auf diese Weise dafür, dass nach Fertigstellung der Klebeverbindung keine Fremdkörper und keine Feuchtigkeit zwischen die Innenseite I des Pferdehufes H und die innere Anlegewand 18 des Pferdehufschuhs 2 eindringen können.

Zudem drücken auch die relativ stark verformbaren Anpressdome 28 gegen die innere Anlegewand 18 und die Aufnahmewand 14 der Trachteneckaufnahme 16. Hierdurch wird auch im Bereich der Eckstreben E ein relativ breit verteilter Anpressdruck erzeugt, so dass auch hier die innere Anlegewand 18 beziehungsweise die Aufnahmewand 14 flächig gegen den Pferdehuf H gedrückt wird und das Klebemittel unter erhöhtem Anpressdruck aushärten kann. Auf diese Weise kann insbesondere an den Enden 10 des Pferdehufschuhs 2 eine sehr stabile und dauerhafte Klebeverbindung mit dem Pferdehuf H im Bereich der Eckstreben E und der Trachtenecken T hergestellt werden.

Sobald die für das jeweilige Klebemittel vorgesehene Aushärtezeit abgelaufen ist, kann die Umhüllung abgenommen werden. Zudem werden in einem vierten Schritt die Anpressmittel vom übrigen Pferdehufschuh 2 entfernt, so dass das Pferd den Untergrund lediglich noch über das Bodenteil 4 kontaktiert und in der Bewegung nicht durch verbleibende Anpressmittel 22 gestört wird.

## Patentansprüche

1. Pferdehufschuh (2) zur Befestigung an einem Pferdehuf (H) mittels eines Klebemittels (K)
mit einem hufeisenförmigen Bodenteil (4), das zumindest überwiegend aus einem Elastomer gebildet ist,
einer sich vom Bodenteil (4) weg erstreckenden äußeren Anlegewand (8) für das seitliche Anlegen an eine Außenseite (A) des Pferdehufs (H)
und mit zwei jeweils an einem Ende (10) des Pferdehufschuhes (2) vorgesehen Befestigungseinrichtungen (12) für die Festlegung im Bereich von Eckstreben (E) des Pferdehufes (H),
**dadurch gekennzeichnet, dass** die beiden Befestigungseinrichtungen (12) am jeweiligen Ende (10) eine U-förmig umlaufende Aufnahmewand (14) aufweisen, die eine Trachteneckaufnahme (16) begrenzt.

2. Pferdehufschuh nach Anspruch 1, **dadurch gekennzeichnet, dass** die Aufnahmewand (14) in eine innere Anlegewand (18) für das seitliche Anlegen an eine Innenseite (I) des Pferdehufs (H) übergeht.

3. Pferdehufschuh nach Anspruch 2, **dadurch gekennzeichnet, dass** die innere Anlegewand (18) zwischen beiden Hufschuhenden (10) geschlossen umläuft.

4. Pferdehufschuh nach Anspruch 2 oder 3, **dadurch gekennzeichnet, dass** an der inneren Anlegewand (18) eine Dichtlippe (20) für das dichtende Anlegen am Pferdehuf (H) vorgesehen ist.

5. Pferdehufschuh nach einem der Ansprüche 1 bis 4, **dadurch gekennzeichnet, dass** an der Aufnahmewand (14) und/oder der inneren Anlegewand (18) Anpressmittel (22) für die Erzeugung erhöhter Klebeanpressdrücke auf die Aufnahmewand (14) und/oder die innere Anlegewand (18) vorgesehen sind.

6. Pferdehufschuh nach Anspruch 5, **dadurch gekennzeichnet, dass** die Anpressmittel (22) wenigstens einen Kraftübertragungskörper (24) aufweisen, der sich von einer Unterseite (26) des Bodenteils (4) bis zur Aufnahmewand (14) und/oder der inneren Anlegewand (18) erstreckt.

7. Pferdehufschuh nach Anspruch 6, **dadurch gekennzeichnet, dass** der wenigstens eine Kraftübertragungskörper (24) wenigstens teilweise über die Unterseite (26) des Bodenteils (4) hinaus ragt.

8. Pferdehufschuh nach einem der Ansprüche 5 bis 7, **dadurch gekennzeichnet, dass** die Anpressmittel (22) im Bereich der Aufnahmewand (14) wenigstens einen Anpressdom (28) aufweisen.

9. Pferdehufschuh nach einem der Ansprüche 1 bis 8, **dadurch gekennzeichnet, dass** an der äußeren Anlegewand (8) wenigstens eine Dehnungsausnehmung (30) eingelassen ist.

10. Pferdehufschuh nach einem der Ansprüche 1 bis 9, **dadurch gekennzeichnet, dass** an einer Oberseite (32) des Bodenteils (4) und/oder einer Innenseite (34) der äußeren Anlegewand (8) eine Aufnahmestruktur (36) für die bessere Aufnahme eines viskosen Klebemittels (K) vorgesehen ist.

11. Pferdehufschuh nach Anspruch 10, **dadurch gekennzeichnet, dass** die Aufnahmestruktur (36) vom Bodenteil (4) abstehende Noppen (38) und/oder in die Innenseite (34) der äußeren Anlegewand (8) eingelassene Rillen (40) aufweist.

12. Pferdehufschuh nach einem der Ansprüche 1 bis 11, **dadurch gekennzeichnet, dass** das Bodenteil (4), die Anlegewand (8) und die Befestigungseinrichtungen (12) wenigstens überwiegend aus einem elastischen Material gebildet sind.

13. Verfahren zur Anbringung eines Pferdehufschuhs (2) nach einem der Ansprüche 5 bis 8 sowie 9-11 wenn abhängig von einem der Ansprüche 5 bis 8 an einem Pferdehuf (H), wobei
in einem ersten Schritt das Klebemittel (K) am Bodenteil (4) und an der Anlegewand (8) des Pferdehufschuhs (2) sowie am vorbereiteten Huf (H) aufgetragen wird,
in einem zweiten Schritt der Pferdehufschuh (2) am Pferdehuf (H) angebracht wird,
in einem dritten Schritt der Pferdehuf (H) mit angebrachtem Pferdehufschuh (2) auf einem Untergrund abgestellt wird, um das Klebemittel (K) unter einem Anpressdruck aushärten zu lassen,
und in einem vierten Schritt nach dem Aushärten des Klebemittels (K) die Anpressmittel (22) vom übrigen Pferdehufschuh (2) entfernt werden.

14. Anbringungsverfahren nach Anspruch 13, **dadurch gekennzeichnet, dass**
im zweiten Schritt der Pferdehufschuh (2) zunächst auf eine Hufspitze (S) des Pferdehufs (H) aufgesetzt und anschließen bis hin zu den Trachteneckaufnahmen (16) auf den Pferdehuf (H) aufgezogen wird.

15. Anbringungsverfahren nach Anspruch 13 oder 14, **dadurch gekennzeichnet, dass** der Pferdehufschuh (2) vor dem dritten Schritt mittels einer Umhüllung in seiner Position am Pferdehuf (H) gesichert wird.

## Claims

1. Horse hoof shoe (2) for fastening to a horse hoof (H) by means of an adhesive (K)
comprising a horseshoe-shaped base part (4), which is formed at least for the most part from an elastomer,
an outer bearing wall (8) extending away from the base part (4) for laterally bearing against an outer side (A) of the horse hoof (H)
and with two fastening devices (12) each provided at an end (10) of the horse hoof shoe (2) and intended for securing in the region of bars (E) of the horse hoof (H),
**characterised in that** the two fastening devices (12) comprise at the respective end (10) a receiving wall (14) which extends around in a U shape and which delimits an heel angle receptacle (16).

2. Horse hoof shoe according to claim 1, **characterised in that** the receiving wall (14) merges into an inner bearing wall (18) for lateral bearing contact on an inner side (I) of the horse hoof (H).

3. Horse hoof shoe according to claim 2, **characterised in that** the inner bearing wall (18) runs around in a closed manner between the two horseshoe ends (10).

4. Horse hoof shoe according to any one of claims 2 or 3, **characterised in that** a sealing lip (20) is provided at the inner bearing wall (18) for a sealing contact at the horse hoof (H).

5. Horse hoof shoe according to one of claims 1 to 4, **characterised in that** pressing means (22) are provided at the receiving wall (14) and/or at the inner bearing wall (18) so as to produce increased adhesive contact pressures onto the receiving wall (14) and/or the inner bearing wall (18).

6. Horse hoof shoe according to claim 5, **characterised in that** the contact pressing means (22) comprise at least one force transfer body (24), which extends from an under side (26) of the base part (4) as far as the receiving wall (14) and/or the inner bearing wall (18).

7. Horse hoof shoe according to claim 6, **characterised in that** the at least one force transfer body (24) projects at least partially over the under side (26) of the base part (4).

8. Horse hoof shoe according to any one of claims 5 to 7, **characterised in that** the contact pressing means (22) comprise in the region of the receiving wall (14) at least one contact pressure dome (28).

9. Horse hoof shoe according to any one of claims 1 to 8, **characterised in that** at least one expansion receiver (30) is let into the outer bearing wall (8).

10. Horse hoof shoe according to any one of claims 1 to 9, **characterised in that** a receiving structure (36) is provided at an upper side (32) of the base part (4) and/or an inner side (34) of the outer bearing wall (8), for the better receiving of a viscous adhesive (K).

11. Horse hoof shoe according to claim 10, **characterised in that** the receiving structure (36) comprises stubs (38) projecting from the base part (4) and/or grooves (40) let into the inner side (34) of the outer bearing wall (8).

12. Horse hoof shoe according to any one of claims 1 to 11, **characterised in that** the base part (4), the bearing wall (8), and the fastening devices (12) are formed at least for the most part from an elastic material.

13. Method for fastening a horse hoof shoe (2) according to any one of claims 5 to 8, and 9-11 if dependent on any one of claims 5 to 8, to a horse hoof (H), wherein, in a first step, the adhesive (K) is applied to the base part (4) and to the bearing wall (8) of the horse hoof shoe (2), as well as to the prepared hoof (H),
in a second step, the horse hoof shoe (2) is applied to the horse hoof (H),
in a third step, the horse hoof (H), with the horse hoof shoe (2) attached, is brought in contact onto a substrate, in order to allow the adhesive (K) to harden under a contact pressure,
and in a fourth step, after the hardening of the adhesive (K), the contact pressure means (22) are removed from the remainder of the horse hoof shoe (2).

14. Application method according to claim 13, **characterised in that,** in the second step, the horse hoof shoe (2) is first set onto a hoof tip (S) of the horse hoof (H), and then drawn onto the horse hoof (H) as far as the heel angle receptacles (16).

15. Application method according to claim 13 or 14, **characterised in that** the horse hoof shoe (2) is secured, before the third step, in its position on the horse hoof (H) by means of a surrounding enclosure.

## Revendications

1. Ferrure équestre (2) destinée à être fixée à un sabot de cheval (H) à l'aide d'une colle (K),
comprenant un élément de base (4) ayant une forme de fer à cheval et formé au moins en majorité d'un élastomère,
une paroi de pose extérieure (8) s'étendant à partir de l'élément de base (4) et destinée à être appliquée latéralement sur une face extérieure (A) du sabot de cheval (H),
et comprenant deux dispositifs de fixation (12) prévus respectivement sur une extrémité (10) de la ferrure équestre (2) et destinés à la fixation dans les zones de barre (E) du sabot de cheval (H)
**caractérisée en ce que** les deux dispositifs de fixation (12) présentent, à chaque extrémité (10), une paroi de réception (14) périphérique en forme de U qui délimite un logement de talon (16).

2. Ferrure équestre selon la revendication 1, **caractérisée en ce que** la paroi de réception (14) se transforme en une paroi de pose intérieure (18) destinée à être appliquée latéralement sur une face intérieure (I) du sabot de cheval (H).

3. Ferrure équestre selon la revendication 2, **caractérisée en ce que** la paroi de pose intérieure (18) s'étend circonférentiellement de manière fermée entre les deux extrémités (10) de ferrure.

4. Ferrure équestre selon la revendication 2 ou 3, **caractérisée en ce que,** sur la paroi de pose intérieure (18), un joint à lèvre (20) est prévu pour la pose étanche sur le sabot de cheval (H).

5. Ferrure équestre selon l'une des revendications 1 à 4, **caractérisée en ce que** des moyens de pressage (22) sont prévus sur la paroi de réception (14) et/ou la paroi de pose intérieure (18) et destinés à générer une pression de pressage de colle augmentée sur la paroi de réception (14) et/ou la paroi de pose intérieure (18).

6. Ferrure équestre selon la revendication 5, **caractérisée en ce que** les moyens de pressage (22) présentent au moins un corps de transmission de force (24) qui s'étend depuis une face inférieure (26) de l'élément de base (4) jusqu'à la paroi de réception (14) et/ou la paroi de pose intérieure (18).

7. Ferrure équestre selon la revendication 6, **caractérisée en ce que** l'au moins un corps de transmission de force (24) fait saillie au moins partiellement au-dessus de la face inférieure (26) de l'élément de base (4).

8. Ferrure équestre selon l'une des revendications 5 à 7, **caractérisée en ce que** les moyens de pressage (22) présentent dans la zone de la paroi de réception (14) au moins un dôme de pressage (28).

9. Ferrure équestre selon l'une des revendications 1 à 8, **caractérisée en ce qu'**au moins une cavité d'allongement (30) est encastrée sur la paroi de pose extérieure (8).

10. Ferrure équestre selon l'une des revendications 1 à 9, **caractérisée en ce qu'**une structure de réception (36) est prévue sur une face supérieure (32) de l'élément de base (4) et/ou une face intérieure (34) de la paroi de pose extérieure (8) pour la réception améliorée d'une colle (K) visqueuse.

11. Ferrure équestre selon la revendication 10, **caractérisée en ce que** la structure de réception (36) présente des tétons (38) s'étendant depuis l'élément de base (4) et/ou des rainures (40) encastrées dans la face intérieure (34) de la paroi de pose extérieure (8).

12. Ferrure équestre selon l'une des revendications 1 à 11, **caractérisée en ce que** l'élément de base (4), la paroi de pose (8) et les dispositifs de fixation (12) sont formés au moins en majorité à partir d'un matériau élastique.

13. Procédé d'application d'une ferrure équestre (2) selon l'une des revendications 5 à 8 ainsi que l'une des revendications 9 à 11 lorsqu'elles sont dépendantes de l'une des revendications 5 à 8, sur un sabot de cheval (H) dans lequel
dans une première étape, la colle (K) est appliquée sur l'élément de base (4) et sur la paroi de pose (8) de la ferrure équestre (2) ainsi que sur le sabot (H) préparé,
dans une deuxième étape, la ferrure équestre (2) est montée sur le sabot de cheval (H),
dans une troisième étape, le sabot de cheval (H) équipé de la ferrure équestre est déposée sur le sol, afin de laisser la colle (K) durcir sous l'effet d'une pression de pressage,
et dans une quatrième étape, après le durcissement de la colle (K) les moyens de pressage (22) sont éloignés du reste de la ferrure équestre (2).

14. Procédé d'application selon la revendication 13, **caractérisé en ce que** dans la deuxième étape, la ferrure équestre (2) est d'abord disposée sur une pointe de sabot (S) du sabot de cheval (H) puis est tirée vers le haut par le logement du talon (16) sur le sabot de cheval (H).

15. Procédé selon la revendication 13 ou 14, **caractérisé en ce que** la ferrure équestre (2), avant la troisième étape, est sécurisée dans sa position sur le sabot de cheval (H) au moyen d'un revêtement.
